# FASCICULE DE BREVET EUROPEEN

(11) **EP 1 932 574 B1**
(45) Date de publication et mention de la délivrance du brevet: **17.02.2010**
(21) Numéro de dépôt: 07122643.5
(22) Date de dépôt: 07.12.2007
(51) Int. Cl.: B01D 36/00, F02M 37/14, F02M 37/22

(54) **Dispositif de filtration de carburant à deux niveaux**
Vorrichtung zur zweistufigen Kraftstofffilterung
Two-level fuel filter device

(30) Priorité: 12.12.2006 FR 0610841
(43) Date de publication de la demande: 18.06.2008
(73) Titulaire: FILTRAUTO, 78280 Guyancourt (FR)
(72) Inventeur: Fremont, Laurent, 27120 Douains (FR); Petiteaux, Mathieu, 35420 Melle (FR)
(74) Mandataire: Cabinet Plasseraud

(56) Documents cités:
- EP-A- 1 154 149
- EP-A- 1 256 707
- WO-A-84/04051
- WO-A-2004/082804
- WO-A-2006/084823
- WO-A-2006/105755
- CA-A- 963 400
- DE-A1- 3 440 506

## Description

L'invention concerne un dispositif de filtration de carburant, en particulier du gazole, pour retirer les particules et l'eau contenues dans le carburant.

On connait divers dispositifs de ce type. WO-2006/084823 divulgue un dispositif comprenant un boîtier renfermant :
- un circuit de circulation de carburant s'étendant entre une entrée et une sortie,
- un premier élément filtrant de particules adapté pour faire coalescer l'eau contenue dans le carburant sous forme de gouttelettes,
- un deuxième élément filtrant de particules disposé en aval du premier élément filtrant suivant le circuit de circulation de carburant, le premier élément filtrant et le deuxième élément filtrant étant tubulaires, coaxiaux et disposés dans le prolongement l'un de l'autre,
- une toile de séparation d'eau interposée entre le premier élément filtrant et le deuxième élément filtrant (13) suivant le circuit de circulation de carburant et adaptée pour former une barrière vis-à-vis des gouttelettes d'eau.

Le premier élément filtrant réalise une filtration grossière, définissant ainsi un élément filtrant dit capacitaire, tout en augmentant la taille des fines gouttes d'eau, tandis que le deuxième élément filtrant réalise une filtration fine plus efficace vis-à-vis des particules ayant traversé le premier élément filtrant. Le premier élément filtrant et la toile ayant un effet combiné pour réaliser une séparation efficace de l'eau et du carburant. Le carburant traversant le deuxième élément filtrant contenant très peu d'eau, la filtration de particules par le deuxième élément se trouve améliorée. De plus, elle permet d'utiliser des matériaux de filtration moins résistants à l'eau, mais plus efficace pour la filtration des particules.

Afin d'améliorer ce dispositif de filtration, et notamment sa compacité, conformément à l'invention le premier élément filtrant et le deuxième élément filtrant définissent intérieurement un espace interne dans lequel est disposée une pompe et la pompe est disposée en aval de la toile de séparation d'eau suivant le circuit de circulation de carburant.

Ainsi, la pompe peut être intégrée au dispositif sans en accroître notablement l'encombrement et tout en limitant le risque que la pompe dégrade l'efficacité de la séparation de l'eau contenue dans le carburant.

Selon une autre caractéristique conforme à l'invention, la pompe est avantageusement disposée dans un fourreau tubulaire étanche au carburant présentant un fond, ledit fourreau définissant un réservoir alimenté en amont de la pompe suivant le circuit de circulation de carburant par un orifice d'alimentation distant du fond, et la pompe présente une entrée et une sortie, ladite entrée étant disposée entre l'orifice d'alimentation et le fond du fourreau.

Ainsi, en cas d'ouverture du boîtier, en particulier pour le remplacement des filtres, le risque que la pompe ne soit pas lubrifiée ou s'emballe du fait de l'aspiration d'air dans la pompe est réduit.

Conformément à l'invention, le dispositif présente en outre de préférence les caractéristiques suivantes :
- le fourreau est tubulaire et s'étend dans l'espace interne, et
- le boîtier comprend un corps auquel est intégré le fourreau et ledit orifice d'alimentation est percé radialement dans le fourreau.

La réalisation du dispositif est ainsi simplifiée.

Selon une caractéristique complémentaire conforme à l'invention, le dispositif comprend en outre une toile secondaire de séparation d'eau disposée dans ledit au moins un orifice d'alimentation et un flasque inférieur fixé à l'extrémité inférieure du premier élément filtrant intègre une zone de décantation pour recueillir l'eau séparée par la toile secondaire de séparation d'eau et qui suivant le circuit de circulation de carburant est disposée entre le premier élément et la toile secondaire de séparation d'eau.

La séparation de l'eau et du carburant est ainsi améliorée.

Selon une caractéristique encore complémentaire conforme à l'invention, le fourreau est surmoulé sur la toile secondaire de séparation d'eau.

Selon une autre caractéristique conforme à l'invention, le premier élément filtrant, le deuxième élément filtrant et la toile de séparation définissent de préférence une unité filtrante monobloc amovible.

La mise en place et le remplacement du premier élément filtrant, du deuxième élément filtrant et de la toile de séparation sont ainsi facilités.

Selon une caractéristique complémentaire conforme à l'invention, de préférence l'unité filtrante comprend un flasque séparant le premier élément filtrant et le deuxième élément filtrant, ledit flasque est muni d'au moins une lèvre orientée vers le premier élément filtrant, et la pompe est disposée entre le premier élément filtrant et le deuxième élément filtrant suivant le circuit de circulation de carburant.

Ainsi, au cas où le flasque et la lèvre d'étanchéité ne permettent pas d'effectuer une étanchéité totale, cette fuite s'effectue de l'aval vers l'avant suivant le circuit de circulation de carburant. La qualité de filtration du dispositif n'est alors pas amoindrie.

Selon une autre caractéristique conforme à l'invention, le dispositif comprend en outre une soupape présentant une position fermée dans laquelle elle empêche la circulation de carburant à travers la sortie du dispositif et une position ouverte dans laquelle elle autorise la circulation de carburant à travers la sortie du dispositif, ladite soupape étant sollicitée vers sa position fermée par des moyens de pression et présentant une tige venant en appui sur un ensemble de filtration comprenant le premier élément filtrant, le deuxième élément filtrant et la toile de séparation et poussant la soupape vers sa position ouverte.

Ainsi, en l'absence filtre, le carburant ne peut pas sortir du dispositif. Par conséquent, le risque que du carburant non filtré sorte du dispositif est réduit.

Selon une caractéristique complémentaire conforme à l'invention, l'ensemble de filtration intègre de préférence des moyens pour isoler l'aval de la pompe de l'amont de la pompe, de sorte qu'en l'absence de l'ensemble de filtration l'aval de la pompe et l'amont de la pompe communiquent l'un avec l'autre autrement qu'à travers la pompe.

Le risque de surpression à l'intérieur du dispositif ou d'échauffement de la pompe est réduit.

Selon une autre caractéristique conforme à l'invention, le dispositif comprend en outre de préférence une zone de décantation en amont du premier élément filtrant suivant le circuit de circulation de carburant pour recueillir l'eau séparée du carburant par le premier élément filtrant.

Les gouttelettes d'eau les plus grosses sont ainsi séparées du carburant dès l'entrée du dispositif.

D'autres caractéristiques et avantages de la présente invention apparaîtront dans la description détaillée suivante, se référant aux dessins annexés dans lesquels :
- la figure 1 illustre un premier mode de réalisation de dispositif de filtration conforme à l'invention,
- la figure 2 illustre à échelle agrandie le détail repéré II à la figure 1,
- la figure 3 illustre l'unité filtrante du dispositif de filtration de la figure 1,
- la figure 4 illustre le dispositif de filtration de la figure 1, ouvert, après avoir enlevé l'unité filtrante,
- la figure 5 illustre le dispositif de filtration de la figure 1, sans l'unité de filtration,
- la figure 6 illustre un deuxième mode de réalisation de dispositif de filtration conforme à l'invention,
- la figure 7 illustre à échelle agrandie le détail repéré VII à la figure 6,
- la figure 8 illustre un troisième mode de réalisation de dispositif de filtration conforme à l'invention,
- la figure 9 illustre un quatrième mode de réalisation de dispositif de filtration conforme à l'invention.

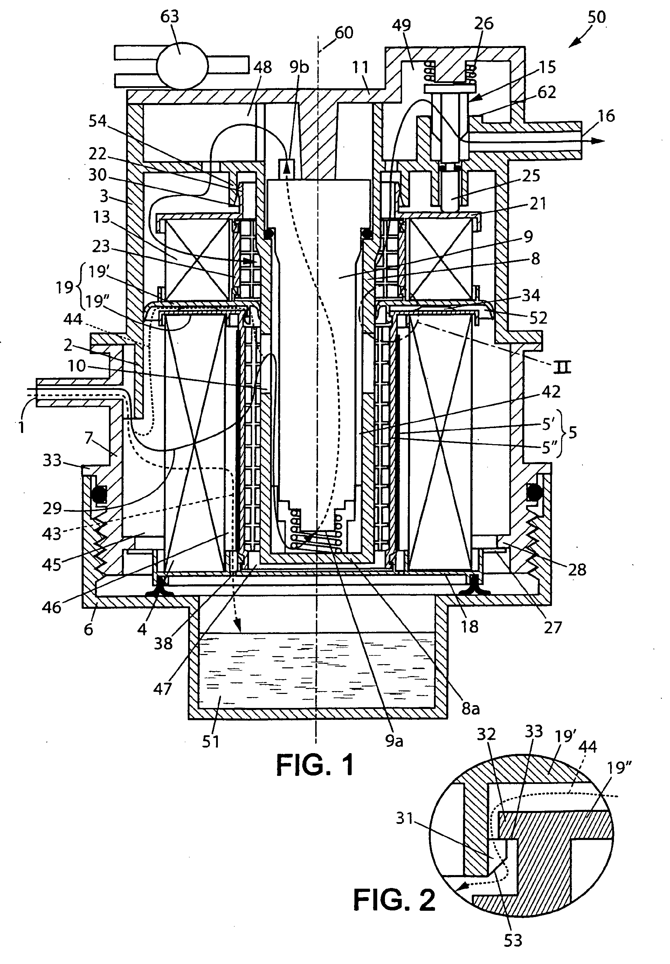

La figure 1 illustre un dispositif 50 de filtration de gazole comprenant un boîtier et une unité filtrante 24 disposée à l'intérieur du boîtier. Le boîtier comprend une canule 1 formant entrée et une canule 16 formant sortie. Le gazole circule dans le dispositif 50 suivant un circuit 29 entre l'entrée 1 et la sortie 16.

Le boîtier comprend essentiellement un couvercle 11, un corps supérieur 3, un corps inférieur 7 et un fond 6 vissé sur le corps inférieur 7. Ces quatre éléments principaux du boîtier sont avantageusement réalisés en matériau plastique. Le couvercle 11, le corps supérieur 3 et le corps inférieur 7 sont de préférence fixés l'un à l'autre par fusion. Cette fusion peut être du type à ultrasons, laser, à lame chauffante ou analogue. Ces procédés permettent de chauffer et fondre localement la matière plastique au niveau des surfaces de contact entre les deux pièces à assembler. Les pièces à assembler sont alors pressées l'une contre l'autre pour que la matière plastique partiellement fondue de chaque pièce se mélange à celle de l'autre. Lorsque les pièces plastiques refroidissent, celles-ci se lient l'une à l'autre de manière définitive. Le couvercle 11, le corps supérieur 3 et le corps inférieur 7 sont ainsi liés l'un à l'autre de manière étanche. D'autres moyens permettant la fixation étanche de ces éléments les uns aux autres pourraient, en variante, être également prévus.

Le fond 6 est maintenu de manière amovible sur le corps 7 par filetage, jusqu'à venir en appui contre une collerette annulaire 33 faisant saillie radialement vers l'extérieur sur le corps inférieur 7 pour former butée vis-à-vis du fond 6. Un joint torique est prévu pour réaliser l'étanchéité entre le fond 6 et le corps inférieur 7.

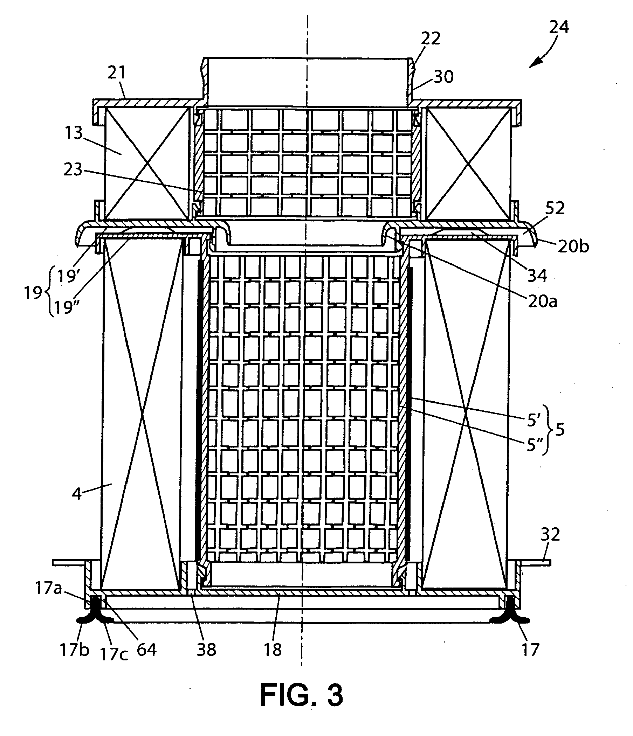

L'unité filtrante 24 forme un ensemble monobloc illustré plus particulièrement à la figure 3. L'unité filtrante 24 comprend essentiellement un premier filtre 4, un tube toilé 5, un deuxième filtre 13, un flasque inférieur 18, un flasque intermédiaire 19 et un flasque supérieur 21. Le filtre 4 et le tube toilé 5 sont tubulaires, coaxiaux et s'étendent entre le flasque inférieur 18 et le flasque intermédiaire 19 suivant un axe longitudinal 60. Le deuxième filtre 13 est tubulaire, s'étend dans le prolongement du premier filtre 4, le premier filtre 4 et le deuxième filtre 13 étant coaxiaux.

Le premier filtre 4 a pour fonction de retenir les particules solides les plus grosses et faire coalescer l'eau contenue dans le gazole entrant dans le dispositif 50 par l'entrée 1. Le premier filtre 4 présente avantageusement un plissage droit formé d'un non-tissé bi-couches. La première couche du point de vue de la circulation du gazole (couche extérieure) est de préférence une couche dite melt-blown constituée de fibres de polyester. Elle présente des pores de taille telle qu'environ 50 % du débit du gazole la traversant traverse des pores de taille inférieure à 11 microns et environ 50 % du débit de gazole la traversant traverse des pores de taille supérieure à 11 microns. La deuxième couche (couche intérieure), située en aval de la première couche par rapport à la circulation du gazole, est avantageusement constituée de fibres de cellulose imprégnées de résine phénolique polymérisée. Elle présente des pores ayant une taille telle que 50 % du débit du gazole la traversant traverse des pores de taille inférieure à 9 microns et environ 50 % du débit de gazole la traversant traverse des pores de taille supérieure à 9 microns. Par conséquent, la taille moyenne des pores de la première couche est environ de 11 microns et celle de la deuxième couche environ de 9 microns. Il existe donc un gradient de porosité décroissant de l'amont vers l'aval du filtre.

La tension (énergie) de surface de la première et de la deuxième couche du premier filtre 4 est avantageusement comprise entre 40 et 80 mN/m, de préférence entre 40 et 72 mN/m et idéalement entre 40 et 60 mN/m. La tension superficielle de l'eau étant de 72 mN/m, le premier filtre 4 est par conséquent de préférence légèrement hydrophobe.

Le tube toilé 5 comprend un tube plastique ajouré 5" portant une toile 5'. La toile 5' est avantageusement réalisée en polyester et de préférence en polyester téréphtalate (PET). La toile 5' constitue un maillage avantageusement formé de mailles de type carré ayant une ouverture (porosité) d'environ 25 à 27 microns. La toile 5' est de préférence traitée pour être hydrophobe et avoir une tension de surface comprise entre 20 et 40 mN/m, de préférence entre 20 et 30 mN/m. Elle est de préférence surmoulée sur le tube 5" formant support.

De préférence, le deuxième filtre 13 présente avantageusement un plissage droit constitué par un non-tissé bi-couches. La première couche (extérieure) est avantageusement une couche dite melt-blown constituée de fibres en polyester. La deuxième couche (intérieure) est disposée en aval de la première couche par rapport à la circulation du gazole et est avantageusement constituée de fibres de cellulose imprégnées d'une résine phénolique polymérisée. La taille moyenne des pores de la première couche est de préférence de 11 microns et celle de la deuxième couche, de préférence de 5 microns, de sorte qu'il existe un gradient de porosité décroissant de l'amont vers l'aval du filtre. En variante, le deuxième filtre 13 pourrait par exemple être constitué d'une seule couche comprenant des fibres de cellulose et des fibres de verre.

A la figure 1, le chemin du gazole dans le dispositif 50 entre l'entrée 1 et la sortie 16 est schématisé par une ligne repérée 29. Le gazole est aspiré depuis le réservoir de carburant du véhicule et entre dans le dispositif 50 par la canule 1. Une paroi verticale 2 intégrée au corps supérieur 3 s'étend en regard de l'entrée 1 pour former une chicane dispersant le flux de gazole pénétrant dans une cavité 45 s'étendant entre l'entrée 1 et le premier filtre 4.

Le gazole ayant traversé radialement le premier filtre 4, de la périphérie vers le centre, pénètre dans une cavité 46 s'étendant entre le premier filtre 4 et le tube toilé 5. Les gouttelettes ayant été grossies dans le premier filtre 4, l'essentiel des gouttelettes a une taille trop importante pour passer à travers la toile hydrophobe 5', de sorte que les gouttelettes descendent par gravité le long de ladite toile 5' dans la cavité 46, passent à travers un orifice 38 ménagé dans le flasque inférieur 18 et sont recueillies dans une zone de décantation 51 ménagée dans le fond 6, tel qu'illustré schématiquement par la ligne pointillée 43 schématisant le chemin principal des gouttelettes d'eau à la figure 1. De manière connue en soit, l'eau peut être évacuée via un orifice de purge disposé en partie basse de la cuve de filtration, s'étendant depuis l'intérieur de la zone de décantation 51 vers l'extérieur du filtre et obturé par une vis de purge, la purge de l'eau pouvant alors être effectuée avant de procéder à une rechange de l'unité filtrante 24 usagée.

Le gazole ayant traversé la toile 5' pénètre dans une cavité 47 s'étendant entre le tube toilé 5 et l'entrée 9a d'un module de pompe 9. Le corps supérieur 3 intègre un fourreau 8 tubulaire s'étendant suivant l'axe longitudinal 60 et coaxial au premier filtre 4, au deuxième filtre 13 et au tube toilé 5. Le fourreau 8 présente un fond 8a et définit un espace interne 42. Il présente des orifices d'entrée 10 distants du fond 8a et situés au-dessus de l'entrée 9a du module de pompe 9.

Le gazole est évacué sous pression par la sortie 9b du module de pompe 9 dans une cavité 48 s'étendant entre la sortie 9b du module de pompe 9 et le deuxième filtre 13. Le gazole traverse alors le deuxième filtre 13 radialement, de la périphérie vers le centre et pénètre ensuite dans une cavité 49. Le deuxième filtre 13 retient l'essentiel des particules encore contenues dans le gazole présent dans la cavité 48. Le gazole sort ensuite du dispositif 50 par la sortie 16.

Le flasque inférieur 18 présente des doigts radiaux 27 venant en butée contre un épaulement 28 du corps inférieur 7, afin de positionner l'unité filtrante 24 dans le boîtier.

Dans le mode de réalisation illustré à la figure 1, le flasque intermédiaire 19 comprend une première partie 19' et une deuxième partie 19" écartées l'une de l'autre par des nervures 34, ménageant entre les deux parties 19', 19" du flasque intermédiaire 19 un espace 52, de sorte à permettre la circulation de gaz. Ainsi, le gaz contenu dans le gazole présent dans la cavité 45 peut s'évacuer vers la sortie 16 du dispositif en passant par l'espace 52 ménagé au-dessus du premier filtre 4 et du tube toilé 5, de sorte à shunter le premier filtre 4 et la toile 5' pour pénétrer dans la cavité 47, tel qu'illustré par le chemin repéré 44 à 1a figure 1. Tel qu'illustré en particulier à la figure 2, la partie 19' est maintenue par encliquetage sur la partie 19" par l'intermédiaire d'une collerette annulaire 53 venant en prise sur un rebord 32, une rainure 31 ménagée dans la collerette annulaire est calibrée pour permettre le passage du gaz et empêcher la circulation de liquide.

Le flasque annulaire 19, et plus précisément sa partie supérieure 19', intègre une première lèvre flexible 20a réalisant l'étanchéité entre le flasque 19 et le fourreau 8, et une deuxième lèvre flexible 20b réalisant l'étanchéité entre le flasque intermédiaire 19 et le corps supérieur 3. Plus précisément, la lèvre 20a réalise l'étanchéité entre la cavité 49 et la cavité 47 vers laquelle elle est orientée, tandis que la lèvre 20b réalise l'étanchéité entre la cavité 48 et la cavité 45 vers laquelle elle est orientée. Il sera par conséquent noté que les lèvres 20a et 20b sont fléchies (orientées) vers l'amont du circuit 29 de circulation du gazole.

Le flasque supérieure 21 comprend une partie principale d'étendant perpendiculairement à la direction longitudinale 60 et intègre une partie tubulaire 30 étanche au gazole présentant un bourrelet annulaire 22, dénommé olive, qui vient au contact d'une partie tubulaire 54 du corps supérieur 3. Les flasques annulaires 18, 19, 21 s'étendent globalement perpendiculairement à la direction longitudinale 60 et sont fixés au premier filtre 4 et au deuxième filtre 13 par collage, fusion partielle, ou adhésif fusible, ou analogue.

Un tube ajouré 23 pour permettre le passage du gazole s'étend coaxialement au deuxième filtre 13, axialement entre le flasque supérieur 21 et le flasque intermédiaire 19, et radialement entre le fourreau 8 et le deuxième filtre 13. Le tube ajouré 23 est encliqueté à ses extrémités axiales sur le flasque supérieur 21 et le flasque intermédiaire 19. De même, le tube ajouré 5" est encliqueté à ses extrémités axiales sur le flasque intermédiaire 19 et le flasque inférieur 18.

Tel qu'illustré à la figure 3, l'unité filtrante 24 constitue un ensemble monobloc comprenant le premier filtre 4, le deuxième filtre 13, le tube toilé 5, le tube ajouré 23, le flasque inférieur 18, le flasque intermédiaire 19 et le flasque supérieur 21. L'unité filtrante 24 comprend en outre un joint d'étanchéité annulaire 17 comprenant en section trois lobes 17a, 17b, 17c. La partie 17a est étroitement emmanchée dans une rainure annulaire 64 du flasque inférieur 18 tandis que les parties 17b, 17c définissent deux lèvres incurvées s'écartant progressivement l'une de l'autre (allant en divergeant) depuis la partie 17a pour venir en appui contre le fond vissé 6 et réaliser ainsi une étanchéité entre la zone de décantation 51 et la cavité 45. Ainsi, le joint 17, grâce à la flexibilité des lèvres 17b, 17c permet de compenser des variations dimensionnelles sur le flasque 18, le corps inférieur 7 et le fond 6. En variante, le joint 17 pourrait ne posséder qu'une seule lèvre, être remplacé par un joint torique, ou un joint annulaire à section ovale suffisamment haut et flexible suivant la direction longitudinale 60 pour compenser les variations dimensionnelles précitées. Le joint 17 est avantageusement réalisé en caoutchouc ou en matériau thermoplastique élastomère.

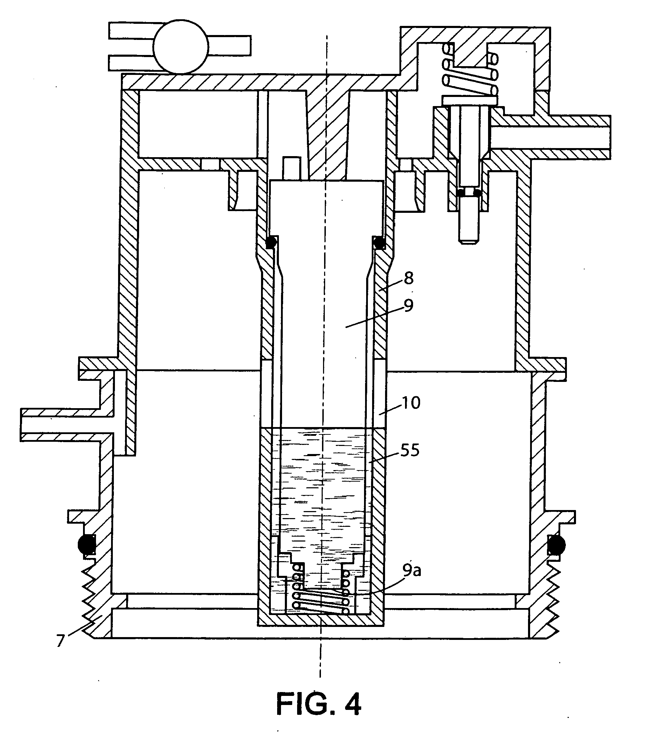

Tel qu'illustré à la figure 4, en dévissant le fond 6 par rapport au corps inférieur 7, l'unité filtrante 24 peut être retirée du boîtier en vue de son remplacement. L'eau contenue dans la zone de décantation 51 est alors vidée et le gazole contenu dans le boîtier s'écoule pour l'essentiel par gravité. Toutefois, les orifices 10 d'entrée dans le fourreau étant distants du fond 8a du fourreau et de l'entrée 9a du module de pompe 9 et plus précisément situés au-dessus de ceux-ci, le fourreau 8 forme un réservoir de gazole en dessous des orifices 10. Un volume 55 de gazole ne peut par conséquent s'écouler par gravité, de sorte que l'entrée 9a du module de pompe 9 reste immergée dans le gazole, évitant ainsi un risque de désamorçage de la pompe 9 lors de la remise en service.

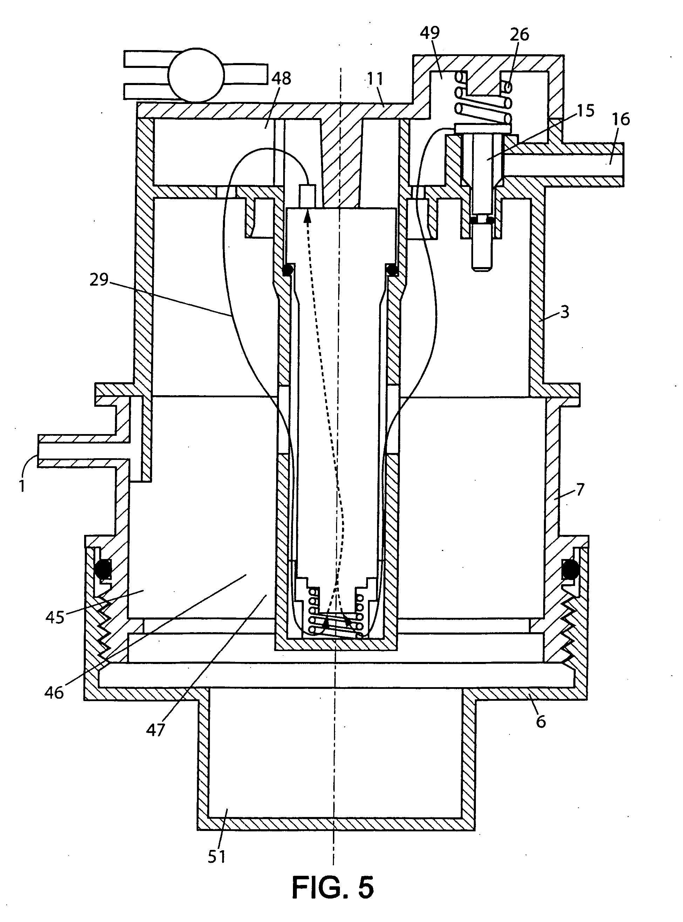

Le dispositif 50 comprend en outre, à proximité de la sortie 16, une soupape 15 mobile entre une position ouverte illustrée à la figure 1 et une position fermée illustrée aux figures 4 et 5 dans laquelle elle vient en appui contre un siège de soupape 62 réalisé dans le corps supérieur 7. La soupape 15 est sollicitée vers sa position fermée par un ressort 26 et comprend une tige 25 sur laquelle le flasque 21 de l'unité filtrante 24 vient pousser pour amener la soupape 15 en position ouverte, lorsque l'unité filtrante 24 est en place dans le boîtier avec le fond 6 correctement vissé sur le corps inférieur 7. Tel qu'illustré à la figure 5, en l'absence d'unité filtrante dans le boîtier, même après avoir replacé le fond 6 vissé sur le corps inférieur 7, la soupape 15 empêche le gazole de sortir de la cavité 49 vers la sortie 16. Par conséquent, le moteur situé en aval de la sortie 16 n'est pas alimenté en gazole qui n'aurait pas été filtré du fait de l'absence d'unité filtrante. L'absence d'unité filtrante 24 met alors en communication les cavités 45, 46, 47, 48 et 49, de sorte que le module de pompe 9 fait circuler le gazole à l'intérieur du boîtier. La pression à l'intérieur du boîtier en l'absence de l'unité filtrante 24 est alors sensiblement égale aux pertes de charge du gazole en circulation à l'intérieur du boîtier sans unité filtrante 24 et reste donc relativement faible.

Le gaz s'échappant à travers l'espace 52 entre la partie 19' et la partie 19" du flasque intermédiaire 19 évite l'accumulation de bulles de gaz venant s'accumuler en partie supérieure du premier filtre 4 dans la cavité 45. En effet, en l'absence d'une pression importante imposée par l'unité de pompe 9 le gaz de traverse difficilement le premier filtre 4. L'accumulation de gaz dans la cavité 45, en amont du premier filtre 4, dans sa partie supérieure, réduirait d'autant la surface filtrante dudit premier filtre 4 pour filtrer le gazole, ce qui augmenterait la vitesse du flux de carburant à travers le premier filtre 4 et la toile 5', et réduirait l'efficacité de filtration et de séparation d'eau réalisées par le premier filtre 4 et la toile hydrophobe 5'. Le gaz une fois parvenu dans la cavité 47 est évacué sous pression par la pompe 9 et forcé à traverser le deuxième filtre 13 pour être évacué en dehors du dispositif 50 par la sortie 16.

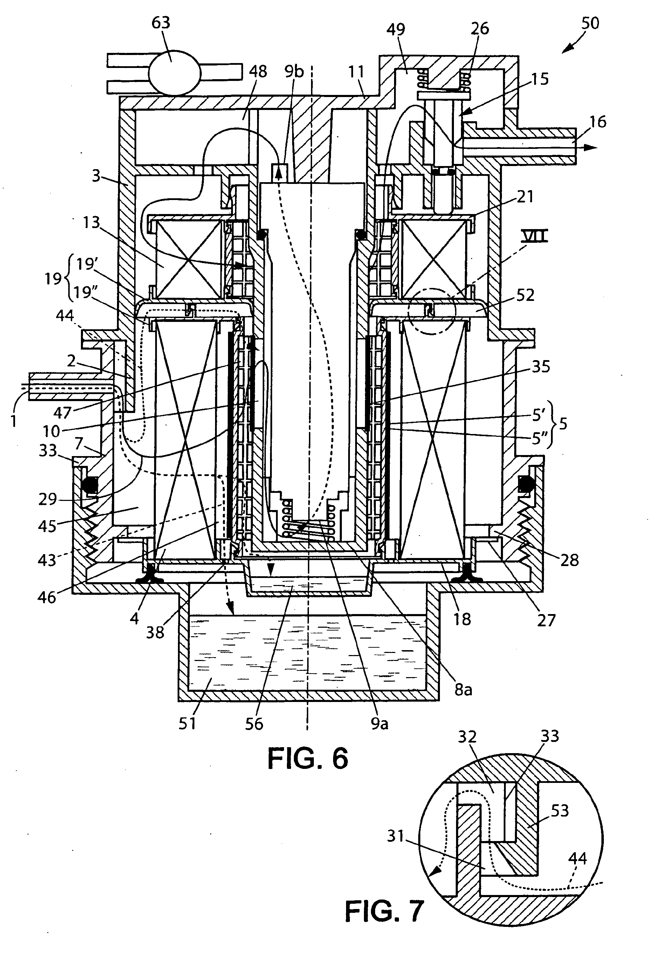

Le dispositif 50 illustré aux figures 6 et 7 se différencie de celui illustré aux figures 1 à 5 en ce que les moyens d'encliquetage 33, 53 entre les parties 19' et 19" du flasque intermédiaire 19 sont disposés axialement entre le premier filtre 4 et le deuxième filtre 13, de sorte que l'espace 52 est déterminé par les moyens d'encliquetage 33, 53, ce qui évite d'avoir à prévoir les nervures 34. La dimension des rainures 31, 32 réalisées respectivement dans les moyens d'encliquetage 53, 33 de la partie 19" et de la partie 19' du flasque intermédiaire 19 est déterminée de manière à ne permettre que le passage de gaz et non de gazole.

En outre, un deuxième tube toilé 35 a été disposé à l'entrée des orifices 10 et une deuxième zone de décantation 56 a été ménagée dans le flasque inférieur 18 pour récupérer les gouttelettes d'eau ayant ruisselé sur le deuxième tube toilé 35 et retombant par gravité dans la cavité 47. Avantageusement, le tube toilé 35 est constitué par une toile hydrophobe surmoulée par la matière plastique du fourreau 8 et est constituée d'une toile hydrophobe dont la matière est similaire à celle de la toile hydrophobe 5' mais dont la porosité est plus fermée que celle de la toile hydrophobe 5'. La taille des porosités de la toile hydrophobe du deuxième tube toilé 35 pourrait, par exemple, être comprise entre environ 10 et 20 microns.

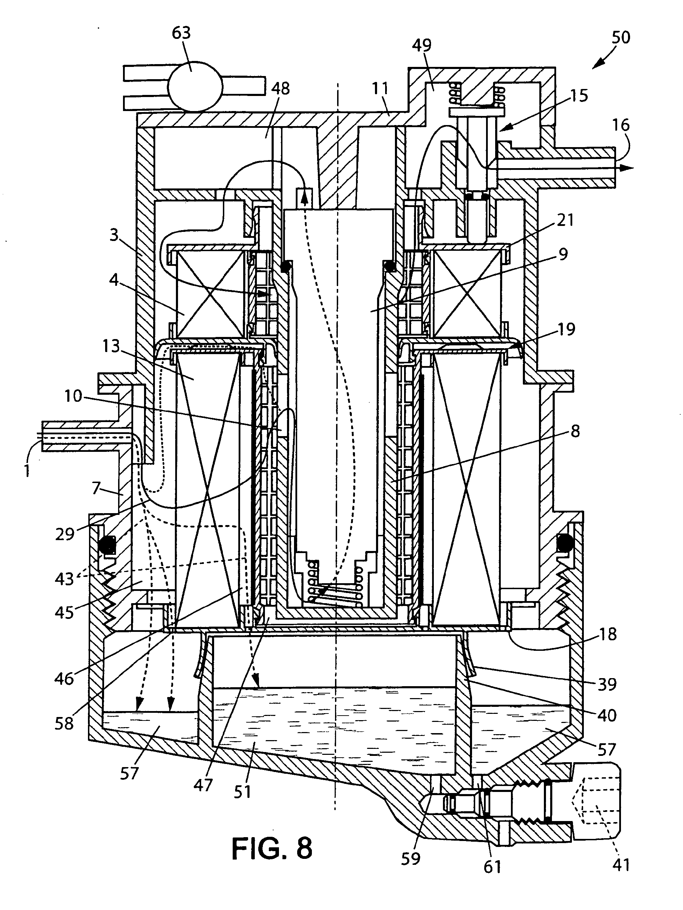

Dans le cadre de certaines applications, il est possible que des gouttes d'eau plus grossières, pénétrant difficilement à l'intérieur du média filtrant du premier élément filtrant 4, s'accumulent en amont du premier élément filtrant 4 dans la cavité 45. Par conséquent, le dispositif 50 illustré à la figure 8 se distingue du dispositif illustré aux figures 1 à 5 essentiellement en ce qu'une zone de décantation annulaire 57 a été prévue dans le fond 6 pour recueillir les gouttelettes d'eau ruisselant par gravité en amont du premier filtre 4, dans la cavité 45. Un orifice 58 a été réalisé dans le flasque inférieur 18 afin de permettre le passage desdites gouttelettes. Deux canaux de purge 59, 61 permettent de vider les zones de décantation 56, 57 en retirant une vis de purge 41. Lorsque la vis de purge 41 est en place, non seulement elle obture les orifices de purge 59, 61, mais encore elle les isole l'un de l'autre et, par conséquent, les zones de décantation 56 et 57 l'une de l'autre. En outre, l'étanchéité entre les zones de décantation 51 et 57 est réalisée au moyen d'une lèvre d'étanchéité tubulaire 39 faisant saillie axialement depuis le flasque inférieur 18. La lèvre d'étanchéité tubulaire 39 coopère avec une surface tronconique formée à l'extrémité d'une portion tubulaire 40 du fond 6.

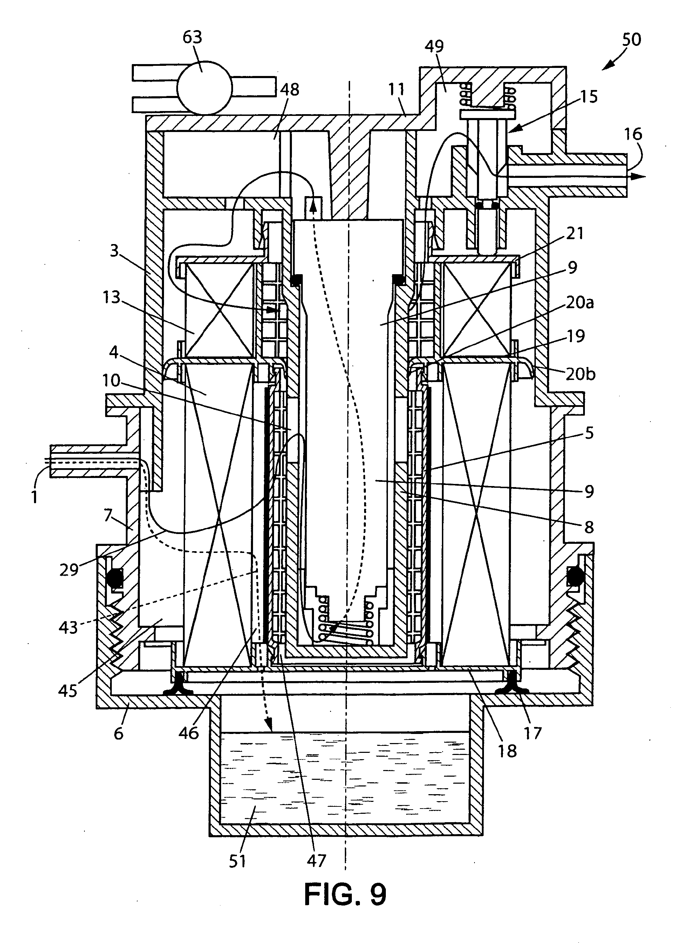

Le dispositif 50 illustré à la figure 9 se distingue du dispositif illustré aux figures 1 à 5 en ce que les parties 19' et 19" du flasque intermédiaire 19 ont été fusionnées en une seule pièce.

Par grand froid, des particules de paraffines (longues chaînes de molécules) se créent dans le carburant et peuvent venir momentanément colmater les éléments filtrants. Par conséquent, le filtre selon l'invention peut également être pourvu de moyens de réchauffage du carburant en amont du premier élément filtrant 4. Les moyens de réchauffage peuvent être du type, par exemple :
- vanne de recirculation permettant par grand froid de rediriger le carburant excédentaire venant de la pompe haute pression et / ou de la rampe commune et des injecteurs vers la zone amont du premier élément filtrant de manière à réchauffer le carburant dans cette zone et ainsi éviter la formation de particules de paraffines. Les dispositifs de recirculation utilisant une capsule de cire sensible à la chaleur du carburant et déplaçant une vanne de recirculation sont connus en soit, une telle vanne est schématisée sur les figures 1 à 9 et référencée 63.
- réchauffeur électrique du genre résistance ohmique, résistance PTC, ou une piste sérigraphiée sur une carte électronique peut être utilisé pour réchauffer le gazole en amont du dispositif 50.

On notera que la soupape 15 pourrait éventuellement être monté sur un dispositif de filtration différent du dispositif de filtration de l'invention, dans la mesure où le dispositif de filtration doit simplement être tel qu'en l'absence du module de filtration 24 ladite soupape est en position fermée et que lorsque le module de filtration 24 est disposé à l'intérieur du dispositif de filtration, la soupape est ouverte.

## Revendications

1. Dispositif (50) de filtration de carburant, en particulier du gazole, comprenant un boîtier (3, 6, 7, 11) renfermant :
- un circuit de circulation (29) de carburant s'étendant entre une entrée (1) et une sortie (16),
- un premier élément filtrant (4) de particules adapté pour faire coalescer l'eau contenue dans le carburant sous forme de gouttelettes,
- un deuxième élément filtrant (13) de particules disposé en aval du premier élément filtrant (4) suivant le circuit de circulation de carburant (29), le premier élément filtrant (4) et le deuxième élément filtrant (13) étant tubulaires, coaxiaux et disposés dans le prolongement l'un de l'autre,
- une toile de séparation d'eau (5) interposée entre le premier élément filtrant (4) et le deuxième élément filtrant (13) suivant le circuit de circulation de carburant (29) et adaptée pour former une barrière vis-à-vis des gouttelettes d'eau,
**caractérisé en ce que** le premier élément filtrant (4) et le deuxième élément filtrant (13) définissent intérieurement un espace interne (42) dans lequel est disposée une pompe (9) et la pompe (9) est disposée en aval de la toile de séparation d'eau (5) suivant le circuit de circulation de carburant (29).

2. Dispositif selon la revendication 1, dans lequel la pompe (9) est disposée dans un fourreau (8) tubulaire étanche au carburant présentant un fond (8a), ledit fourreau (8) définissant un réservoir alimenté en amont de la pompe (9) suivant le circuit de circulation de carburant (29) par au moins un orifice d'alimentation (10) distant du fond (8a), et la pompe (9) présente une entrée (9a) et une sortie (9b), ladite entrée (9a) étant disposée entre l'orifice d'alimentation (10) et le fond (8a) du fourreau (8).

3. Dispositif selon la revendication 2, dans lequel :
- le fourreau (8) est tubulaire et s'étend dans l'espace interne (42), et
- le boîtier (3, 6, 7, 11) comprend un corps (3) auquel est intégré le fourreau (8) et ledit orifice d'alimentation (10) est percé radialement dans le fourreau (8).

4. Dispositif selon la revendication 2 ou la revendication 3, dans lequel une toile secondaire de séparation d'eau (35) est disposée dans ledit au moins un orifice d'alimentation (10) et un flasque inférieur (18) fixé à l'extrémité inférieure du premier élément filtrant (4) intègre une zone de décantation (56) pour recueillir l'eau séparée par la toile secondaire de séparation d'eau (35) et qui suivant le circuit de circulation (29) de carburant est disposée entre le premier élément (4) et la toile secondaire de séparation d'eau (35).

5. Dispositif selon la revendication 4, dans lequel le fourreau (8) est surmoulé sur la toile secondaire de séparation d'eau (35).

6. Dispositif selon l'une quelconques des revendications précédentes, dans lequel le premier élément filtrant (4), le deuxième élément filtrant (13) et la toile de séparation (5) définissent un ensemble de filtration (24) intégrant des moyens pour isoler l'aval de la pompe (9) de l'amont de la pompe, de sorte qu'en l'absence de l'ensemble de filtration (24) l'aval de la pompe et l'amont de la pompe communiquent l'un avec l'autre autrement qu'à travers la pompe.

7. Dispositif selon l'une quelconque des revendications précédentes, dans lequel le premier élément filtrant (4), le deuxième élément filtrant (13) et la toile de séparation (5) définissent une unité filtrante (24) monobloc amovible.

8. Dispositif selon la revendication 7, dans lequel l'unité filtrante (24) comprend un flasque (19) séparant le premier élément filtrant (4) et le deuxième élément filtrant (13), ledit flasque (19) étant muni d'au moins une lèvre (20a, 20b) orientée vers le premier élément filtrant (4), et la pompe (9) est disposée entre le premier élément filtrant (4) et le deuxième élément filtrant (13) suivant le circuit de circulation (29) de carburant.

9. Dispositif selon l'une quelconque des revendications précédentes, comprenant en outre un passage (31, 32) pour faire passer du gaz contenu dans le carburant de l'amont vers l'aval du premier élément filtrant (4) suivant circuit de circulation (29) de carburant.

10. Dispositif selon l'une quelconque des revendications précédentes, comprenant en outre une soupape (15) présentant une position fermée dans laquelle elle empêche la circulation de carburant à travers la sortie (16) du dispositif et une position ouverte dans laquelle elle autorise la circulation de carburant à travers la sortie (16) du dispositif, ladite soupape (15) étant sollicitée vers sa position fermée par des moyens de pression (26) et présentant une tige (25) venant en appui sur un ensemble de filtration (24) comprenant le premier élément filtrant (4), le deuxième élément filtrant (13) et la toile de séparation (5) et poussant la soupape (15) vers sa position ouverte.

11. Dispositif selon l'une quelconque des revendications précédentes, dans lequel le dispositif comprend en outre une zone de décantation (57) en amont du premier élément filtrant (4) suivant le circuit de circulation (29) de carburant pour recueillir l'eau séparée du carburant par le premier élément filtrant (4).

## Claims

1. A device (50) for filtering fuel, in particular diesel, the device comprising a housing (3, 6, 7, 11) containing:
- a fuel flow circuit (29) extending between an inlet (1) and an outlet (16);
- a first particle filter element (4) adapted to cause the water contained in the fuel to coalesce in the form of droplets;
- a second particle filter element (13) disposed downstream from the first filter element (4) in the fuel flow circuit (29), the first filter element (4) and the second filter element (13) being tubular, sharing a common axis, and being disposed one extending the other; and
- a water separation fabric (5) interposed between the first filter element (4) and the second filter element (13) in the fuel flow circuit (29) and adapted to form a barrier against droplets of water;
**Characterized in that** the first filter element (4) and the second filter element (13) define internally an inside space (42) in which a pump (9) is disposed, and the pump (9) is disposed downstream from the water separation fabric (5) in the fuel flow circuit (29).

2. A device according to claim 1, wherein the pump (9) is disposed in a fuel-tight tubular sheath (8) presenting a bottom (8a), said sheath (8) defining a container fed upstream from the pump (9) in the fuel flow circuit (29) by at least one feed orifice (10) remote from the bottom (8a), and the pump (9) presenting an inlet (9a) and an outlet (9b), said inlet (9a) being disposed between the feed orifice (10) and the bottom (8a) of the sheath (8).

3. A device according to claim 2, wherein:
- the sheath (8) is tubular and extends in the inside space (42); and
- the housing (3, 6, 7, 11) comprises a body (3) in which the sheath (8) is integrated, and said feed orifice (10) is pierced radially through the sheath (8).

4. A device according to claim 2 or claim 3, wherein a secondary water separation fabric (35) is disposed in said at least one feed orifice (10), and a bottom end plate (18) secured to the bottom end of the first filter element (4) includes a settling zone (56) for collecting the water separated by the secondary water separation fabric (35), and which is disposed between the first element (4) and the secondary water separation fabric (35) in the fuel flow circuit (29).

5. A device according to claim 4, wherein the sheath (8) is overmolded on the secondary water separation fabric (35).

6. A device according to anyone of the preceding claims, wherein the first filter element (4), the second filter element (13), and the separation fabric (5) define a filter assembly (24) including means for isolating the downstream end of the pump (9) from the upstream end of the pump such that in the absence of the filter assembly (24) the downstream end of the pump and the upstream end of the pump communicate with each other than through the pump.

7. A device according to anyone of the preceding claims, wherein the first filter element (4), the second filter element (13), and the separation fabric (5) define a removable one-piece filter unit (24).

8. A device according to claim 7, wherein the filter unit (24) has a plate (19) separating the first filter element (4) and the second filter element (13), said plate (19) being provided with at least one lip (20a, 20b) facing towards the first filter element (4), and the pump (9) is disposed between the first filter element (4) and the second filter element (13) in the fuel flow circuit (29).

9. A device according to anyone of the preceding claims, further comprising a passage (31, 32) for passing the gas contained in the fuel from upstream to downstream relative to the first filter element (4) in the fuel flow circuit (29).

10. A device according to anyone of the preceding claims, further including a valve (15) having a closed position in which it prevents fuel from flowing through the outlet (16) of the device, and an open position in which it allows fuel to flow through the outlet (16) of the device, said valve (15) being urged towards its closed position by pressure means (26) and presenting a rod (25) coming to bear against a filter assembly (24) comprising the first filter element (4), the second filter element (13), and the separation fabric (5) and serving to push the valve (15) towards its open position.

11. A device according to anyone of the preceding claims, wherein the device further comprises a settling zone (57) upstream from the first filter element (4) in the fuel flow circuit (29) for collecting the water separated from the fuel by the first filter element (4).

## Patentansprüche

1. Vorrichtung (50) zum Filtern von Kraftstoff, insbesondere von Dieselkraftstoff, die ein Gehäuse (3,6, 7,11) aufweist, das enthält:
- einen Kraftstoffzirkulationskreis (29), der sich zwischen einem Einlass (1) und einem Auslass (16) erstreckt,
- ein erstes Partikelfilterelement (4), das dazu ausgelegt ist, das im Kraftstoff enthaltene Wasser in Form von Tröpfchen zusammenzubinden,
- ein zweites Partikelfilterelement (13), das hinter dem ersten Filterelement (4) längs des Kraftstoffzirkulationskreises (29) angeordnet ist, wobei das erste Filterelement (4) und das zweite Filterelement (13) rohrförmig und koaxial sind und in gegenseitiger Verlängerung angeordnet sind,
- einen Wassertrennstoff (5), der zwischen dem ersten Filterelement (4) und dem zweiten Filterelement (13) längs des Kraftstoffzirkulationskreises (29) angeordnet und dazu ausgelegt ist, für die Wassertröpfchen eine Sperre zu bilden,
- **dadurch gekennzeichnet, dass** das erste Filterelement (4) und das zweite Filterelement (13) in sich einen Innenraum (42) definieren, in dem eine Pumpe (9) angeordnet ist, und die Pumpe (9) hinter dem Wassertrennstoff (5) längs des Kraftstoffzirkulationskreises (29) angeordnet ist.

2. Vorrichtung nach Anspruch 1, wobei die Pumpe (9) in einer rohrförmigen Hülse (8), die für Kraftstoff dicht ist und einen Boden (8a) aufweist, angeordnet ist, wobei die Hülse (8) einen Vorratsbehälter definiert, der vor der Pumpe (9) längs des Kraftstoffzirkulationskreises (29) durch wenigstens eine vom Boden (8a) beabstandete Versorgungsöffnung (10) versorgt wird, und wobei die Pumpe (9) einen Einlass (9a) und einem Auslass (9b) aufweist, wobei der Eingang (9a) zwischen der Versorgungsöffnung (10) und dem Boden (8a) der Hülse (8) angeordnet ist.

3. Vorrichtung nach Anspruch 2, wobei:
- die Hülse (8) rohrförmig ist und sich in den Innenraum (42) erstreckt und
- das Gehäuse (3,6, 7,11) einen Körper (3) aufweist, in den die Hülse (8) integriert ist, wobei die Versorgungsöffnung (10) die Hülse (8) radial durchsetzt.

4. Vorrichtung nach Anspruch 2 oder Anspruch 3, wobei in der wenigstens einen Versorgungsöffnung (10) ein sekundärer Wassertrennstoff (35) angeordnet ist und in einen am unteren Ende des ersten Filterelements (4) befestigten unteren Flansch (18) eine Klärungszone (56) integriert ist, die das durch den sekundären Wassertrennstoff (35) getrennte Wasser sammelt und die in den Kraftstoffzirkulationskreis (29) zwischen dem ersten Element (4) und dem sekundären Wassertrennstoff (35) angeordnet ist.

5. Vorrichtung nach Anspruch 4, wobei die Hülse (8) dem sekundären Wassertrennstoff (35) überformt ist.

6. Vorrichtung nach einem der vorhergehenden Ansprüche, wobei das erste Filterelement (4), das zweite Filterelement (13) und der Wassertrennstoff (5) eine Filteranordnung (24) definieren, in die Mittel integriert sind, um die Auslassseite der Pumpe (9) von der Einlassseite der Pumpe zu isolieren, derart, dass bei Fehlen der Filteranordnung (24) die Auslassseite der Pumpe mit der Einlassseite der Pumpe anders in Verbindung steht als durch die Pumpe hindurch.

7. Vorrichtung nach einem der vorhergehenden Ansprüche, wobei das erste Filterelement (4), das zweite Filterelement (13) und der Trennstoff (5) eine entnehmbare Monoblock-Filtereinheit (24) definieren.

8. Vorrichtung nach Anspruch 7, wobei die Filtereinheit (24) einen Flansch (19) aufweist, der das erste Filterelement (4) und das zweite Filterelement (13) trennt, wobei der Flansch (19) mit wenigstens einer zum ersten Filterelement (4) orientierten Lippe (20a, 20b) versehen ist und wobei die Pumpe (9) zwischen dem ersten Filterelement (4) und dem zweiten Filterelement (13) längs des Kraftstoffzirkulationskreises (29) angeordnet ist.

9. Vorrichtung nach einem der vorhergehenden Ansprüche, die außerdem einen Durchlass (31,32) aufweist, um das im Kraftstoff enthaltene Gas von der Einlassseite zur Auslassseite des ersten Filterelements (4) längs des Kraftstoffzirkulationskreises (29) zu bewegen.

10. Vorrichtung nach einem der vorhergehenden Ansprüche, die außerdem ein Ventil (15) enthält, das eine geschlossene Position, in der es die Zirkulation von Kraftstoff durch den Auslass (16) der Vorrichtung verhindert, und eine geöffnete Position, in der es die Zirkulation von Kraftstoff durch den Auslass (16) der Vorrichtung zulässt, besitzt, wobei das Ventil (15) durch Druckmittel (26) in die geschlossene Position vorgespannt ist und einen Stift (25) aufweist, der sich an einer Filteranordnung (24) abstützt, die das erste Filterelement (4), das zweite Filterelement (13) und den Trennstoff (5) enthält und das Ventil (15) in die geöffnete Position drängt.

11. Vorrichtung nach einem der vorhergehenden Ansprüche, wobei die Vorrichtung außerdem vor dem ersten Filterelement (4) längs des Kraftstoffzirkulationskreises (29) eine Klärungszone (57) aufweist, um das durch das erste Filterelement (4) vom Kraftstoff getrennte Wasser zu sammeln.
